# NEUE EUROPÄISCHE PATENTSCHRIFT

(11) **EP 3 003 807 B2**
(45) Veröffentlichungstag und Bekanntmachung des Hinweises auf die Entscheidung über den Einspruch: **24.07.2024**
(45) Hinweis auf die Patenterteilung: 20.02.2019
(21) Anmeldenummer: 14726604.3
(22) Anmeldetag: 27.05.2014
(51) Int. Cl.: B60L 3/00, B60T 13/66, B60T 17/22

(54) **ELEKTROHYDRAULISCHES BREMSLÜFTGERÄT UND BREMSANORDNUNG**
ELECTROHYDRAULIC BRAKE RELEASE DEVICE AND BRAKE SYSTEM
RELEVEUR DE FREIN ÉLECTROHYDRAULIQUE ET ENSEMBLE DE FREINAGE

(30) Priorität: 28.05.2013 DE 102013105446
(43) Veröffentlichungstag der Anmeldung: 13.04.2016
(73) Patentinhaber: DELLNER BUBENZER GERMANY GmbH, 57548 Kirchen-Wehbach (DE)
(72) Erfinder: GENTZSCH, Iris, 39387 Oschersleben (DE)
(74) Vertreter: MFG Patentanwälte Meyer-Wildhagen Meggle-Freund Gerhard PartG mbB
(86) Internationale Anmeldenummer: PCT/EP2014/060921
(87) Internationale Veröffentlichungsnummer: WO 2014/191395

(56) Entgegenhaltungen:
- CN-U- 202 785 450
- DE-A1- 2 037 626
- DE-A1- 2 103 701
- DE-A1- 3 231 319
- DE-U1- 8 715 386
- FR-A- 1 311 466
- GB-A- 1 387 039
- JP-A- 2002 240 788
- US-B1- 6 519 939

## Beschreibung

### GEBIET DER ERFINDUNG

Die vorliegende Erfindung betrifft ein elektro-hydraulisches Bremslüftgerät. Die Erfindung betrifft ebenfalls eine Bremsanordnung, insbesondere in Industriebremsanlagen.

### HINTERGRUND DER ERFINDUNG

Im Industriebereich gibt es eine Vielzahl von federbelasteten Bremsanlagen, bei denen eine Federkraft über ein kraftverstärkendes Hebelsystem auf Bremselemente wirkt, die dann wiederum an einem entsprechenden Bremskörper (z.B. eine Scheibe oder eine Trommel) angreifen. Solche Industriebremsen sind beispielsweise als Scheiben-, Trommel- oder aber auch als Umschlingungsbremsen ausgebildet. Sie werden verbreitet in der Fördertechnik, z.B. in Transportbandanlagen, Kransystemen, Förderanlagen und Hubsystemen etc., eingesetzt. Sie sind in der Regel als Sicherheitsbremsen ausgelegt und arbeiten nach dem Fail-Save-Prinzip. D.h. die Bremsen sind so ausgelegt, dass sie im Störfall, z.B. bei einem Stromausfall, automatisch schließen und die zu bremsenden bewegten Teile möglichst schnell zum Stillstand bringen oder in einer bestimmten Position festhalten (z.B. bei Hebezeugen oder Aufzügen).

Dazu ist es zunächst notwendig, die Bremsen im geöffnetem, also im gelüfteten Zustand zu halten. Dazu dienen sogenannte Bremslüftgeräte, welche im aktivierten Zustand gegen die Bremsfederkraft arbeiten, diese aufheben, die Bremse öffnen und im (geöffneten) gelüfteten Zustand festhalten. Dazu dienen oft elektro-hydraulische Bremslüftgeräte, die parallel zur Bremsfeder auf das Bremshebelgestänge wirken (siehe z.B. DE 21 03 701 A1).

Sie arbeiten nach folgendem Prinzip: Zum Lüften wird ein Antrieb (in der Regel ein Elektromotor) in Bewegung versetzt. Dieser Antrieb wirkt auf eine Kreiselpumpe, die im Betrieb ein Hydraulikmedium unter Druck setzt und fördert, das seinerseits auf eine Zylinderkolbenfläche wirkt, die über eine Stellstange mit dem Bremshebelgestänge gekoppelt ist. Dabei wirkt bei einer bestimmten Drehzahl ein bestimmter Druck auf die Stellkolbenfläche, der wiederum eine bestimmte Stellkraft auf das Gestänge ausübt und die (Rück)stellkraft der Bremsfeder neutralisiert.

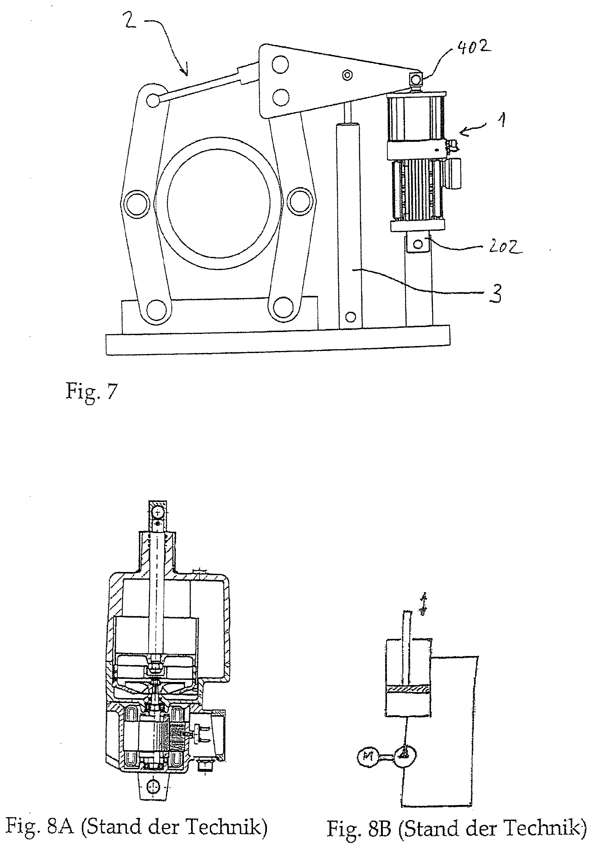

Als Pumpe dienen dabei in der Regel Kreiselpumpen, die im Lüften/Lösen der Bremse im Dauerbetrieb betätigt werden müssen. Beim Bremsen wird der Antrieb angehalten, die Kreispumpe steht still und das Hydraulikmedium strömt durch die Kreiselpumpe zurück in einen Vorratsbehälter, der Stellzylinder wird durch die Bremsfeder zurückgeschoben und die Bremse greift ein bzw. "fällt ein". Solche Bremslüftgeräte (vgl. Fig. 8A und 8B) haben einen einfachen Aufbau, bieten eine hohe Betriebssicherheit, haben aber auch eine Reihe von Nachteilen: Die über Kreiselpumpen im Dauerbetrieb aufbringbaren Drücke sind relativ niedrig, sodass die Wirkflächen an den Stellkolben relativ groß sein müssen und so die erforderlichen Bremslüftgeräte ebenfalls relativ groß ausfallen. Im Dauerbetrieb werden die Antriebe dauerbelastet und müssen deswegen auch für sehr lange Betriebszeiten ausgelegt werden. Zum Lüften einer Bremse müssen relativ große Volumen an Hydraulikmedium bewegt werden. Dies verlängert die realisierbaren Stellzyklen, sodass solche Bremslüftgeräte für sehr kurze Lüft- und Bremsintervalle nur begrenzt einsatzfähig sind. Um die im Dauerbetrieb an Wellendichtungen auftretenden Probleme zu minimieren laufen die Elektromotoren im Hydraulikmedium (sogenannte Nassläufer). Dies bedeutet jedoch, dass zur Wartung der Motoren die Hydraulikflüssigkeit zunächst vollständig entfernt werden muss. Durch den zum Lüften erforderlichen Dauerbetrieb werden auch thermische Probleme verursacht. Insbesondere werden die Baugröße, das Gewicht und die in Verbindung mit dem Dauerbetrieb bestehenden Probleme als nachteilig empfunden.

Ein Ansatz kann darin bestehen, ein Bremslüftgerät im Aussetzbetrieb zu betreiben, d.h. nach dem Aufbau eines bestimmten Betriebsdruckes am Zylinder wird dieser über geeignete Schaltventile gehalten und beim Bremsen wieder abgebaut. Dazu sind jedoch zusätzliche Leitungs- und Ventilanordnungen am Bremslüftgerät erforderlich.

Die DE 36 07 419 C1 offenbart eine druckmittelbetriebene Zylinder-Pumpen-Baueinheit bei der, vorzugsweise axial, ein Antriebsmotor angeordnet ist zu einer axialen Gehäusewand, die, vorzugsweise axial, ein Druckmittelpumpe, eine Steuerventileinrichtung, ein Druckmittelvorrats- und Ausgleichsvolumen sowie einen Arbeitskolben mit Arbeitskolbenstange enthält. Der Druckmittelpumpendruck ermöglicht dabei mindestens eine Hubrichtung des Arbeitskolben.

Es besteht also die Aufgabe, ein Bremslüftgerät zu realisieren, bei dem die o.g. Nachteile wenigstens teilweise ausgeräumt werden.

### ZUSAMMENFASSUNG DER ERFINDUNG

Diese Aufgabe erfüllt das Bremslüftgerät nach Anspruch 1.

Weitere Aspekte und Merkmale der vorliegenden Erfindung ergeben sich aus den abhängigen Ansprüchen, der beigefügten Zeichnung und der nachfolgenden Beschreibung bevorzugter Ausführungsformen.

### KURZBESCHREIBUNG DER ZEICHNUNG

Ausführungsformen der Erfindung werden nun beispielhaft und unter Bezugnahme auf die Figuren beschrieben. Darin zeigt:
- Fig. 1: eine perspektivische Ansicht eines erfindungsgemäßen Bremslüftgeräts;
- Fig. 1A: eine perspektivische Ansicht einer alternativen Ausführungsform eines erfindungsgemäßen Bremslüftgerätes
- Fig. 2: eine Vorderansicht des in Fig. 1 dargestellten Bremslüftgerätes;
- Fig. 3: eine Längsschnittdarstellung (Schnitt A-A) des Bremslüftgerätes aus Fig. 1 und 2;
- Fig. 4A bis F: eine perspektivische Negativdarstellung verschiedener Bereiche in unterschiedliche Ansichten der in der Funktionseinheit ausgebildeten Leitungsanordnung;
- Fig. 5A: ein Schaltschema zum Betrieb des erfindungsgemäßen Lüftgerätes;
- Fig. 5B: ein aus dem in Fig. 5A dargestellten Schaltschema abgeleitetes Schaltschema
- Fig. 6: eine Vorderansicht des in Fig. 1 dargestellten Bremslüftgeräts ohne Tankbaugruppe; und
- Fig. 7: eine schematische Darstellung einer Bremsanordnung mit dem Lüftgerät gemäß Fig. 1
- Fig. 8A und B: ein Lüftgerät nach dem Stand der Technik mit seinem Schaltschema.

### BESCHREIBUNG VON AUSFÜHRUNGSFORMEN

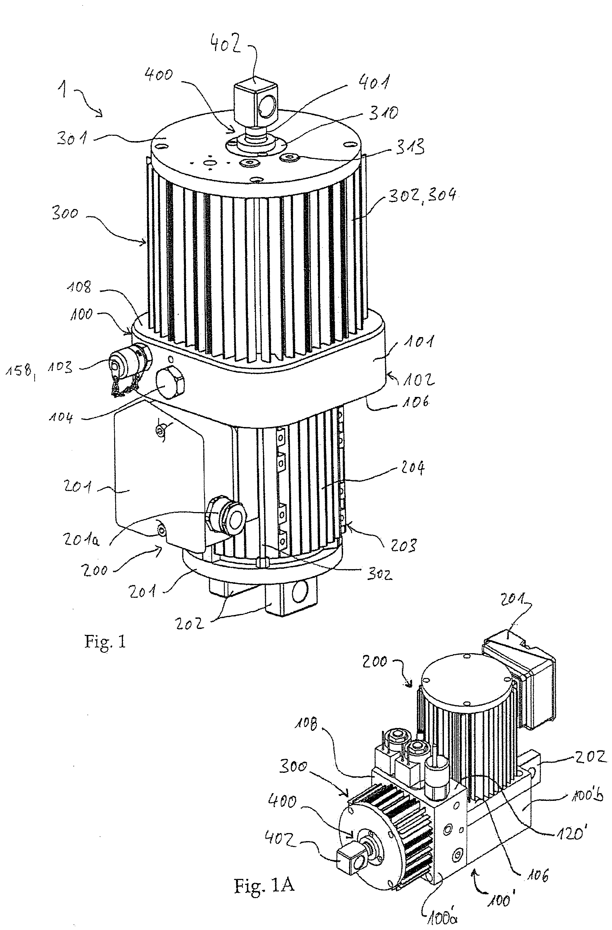

Insbesondere in Fig. 1, 2, 3 und den Figuren 5A und 6 ist eine Ausführungsform in Übereinstimmung mit der vorliegenden Erfindung veranschaulicht. Vor einer detaillierten Beschreibung folgen zunächst allgemeine Erläuterungen zu den Ausführungsformen.

Das erfindungsgemäße Bremslüftgerät zeichnet sich insbesondere dadurch aus, dass das Pumpaggregat in einer in der Funktionseinheit ausgebildeten Ausnehmung angeordnet ist, die einerseits in kommunizierender Verbindung mit der Tankbaugruppe besteht, andererseits über eine Leitungsanordnung mit der Stellzylinderanordnung in Wirkverbindung steht und schließlich mittels eines Lagerträgerdeckels gegen einen trockenlaufenden Antriebsmotor der elektrischen Antriebseinheit abgedichtet ist.

Diese Merkmalskombination erlaubt es, dass das Pumpaggregat ohne eigenes Hydraulikgehäuse direkt in die Funktionseinheit eingebaut werden kann. Durch die kommunizierende Verbindung mit der Tankbaugruppe wird dem Pumpaggregat direkt Hydraulikmedium zugeführt und über die Leitungsanordnung, die ebenfalls mit der Ausnehmung verbunden ist kann die Stellzylinderanordnung durch die Wirkung des Pumpaggregats hydraulisch angesteuert werden. Dabei verhindert der Lagerträgerdeckel, dass Hydraulikmedium in den trockenlaufenden, elektrischen Antriebsmotor bzw. die Antriebseinheit gelangen kann. Auf diese Weise kann die elektrische Antriebseinheit unmittelbar am Pumpaggregat angeordnet werden, ist aber gleichzeitig gegen Hydraulikmedium abgeschirmt, sodass regelmäßige Wartungsarbeiten an der elektrischen Antriebseinheit durchgeführt werden können, ohne dass das Hydraulikmedium vorher abgelassen bzw. vor erneuter Inbetriebnahme des Bremslüftgerätes wieder eingefüllt werden müsste. Damit entfällt auch eine zeitintensive und fehleranfällige Entlüftung der Leitungsanordnung vor in Inbetriebnahme, die gegebenenfalls zusätzlich durch die Einbaulage des Bremslüftgerätes erschwert werden kann.

Erfindungsgemäß ist dabei der Lagerträgerdeckel so gestaltet, dass diesen eine das Pumpaggregat antreibende Welle durchsetzt. Diese Gestaltungsweise erlaubt mehrere Alternativen zur Kopplung der elektrischen Antriebseinheit mit dem Pumpaggregat:
Eine Möglichkeit besteht darin, dass die antreibende Welle gleichzeitig Bestandteil der elektrischen Antriebseinheit und des Pumpaggregates ist.

In einer anderen Ausführung kann auch das Abtriebsende der Antriebswelle der elektrischen Antriebseinheit durch den Lagerträgerdeckel hindurch in die Ausnehmung hineinragen und dort über eine geeignete Kupplung mit dem Antriebsende des Pumpaggregates gekoppeltsein, und zwar derart, dass die Drehbewegung der Antriebswelle auf das Pumpaggregat übertragen wird.

In gleicher Weise gibt es auch Ausführungen bei denen die Antriebswelle des Pumpaggregates aus der Ausnehmung heraus durch den Lagerträgerdeckel hindurch in den trockenlaufenden Bereich des Antriebsmotors hineinragt und dort mit dem Antriebsende der Motorwelle verbunden ist.

Erfindungsgemäß umfasst dabei der Lagerträgerdeckel eine die Welle tragende Lageranordnung, beispielsweise ein geeignetes Wälzlager, welches als Fest- oder Loslager ausgebildet ist.

Eine besonders kompakte, betriebssichere, und gleichzeitig variable Ausführung des Bremslüftgerätes ergibt sich, wenn die Funktionseinheit als einstückiger Funktionsblock ausgebildet ist, in dem eine Stellzylinderaufnahme zur Aufnahme der Stellzylinderanordnung, die Ausnehmung für die Antriebseinheit sowie die Leitungsanordnung einstückig ausgebildet sind. Kurze Leitungswege und geringe Leitungselastizitäten erlauben so eine sehr wirkungsvolle Drucksteuerung und sicherere Druckbeaufschlagung der Stellzylinderanordnung.

In einer Ausführung ist diese dabei mit ihrem Zylinderrohr kraftschlüssig und lösbar in der Stellzylinderaufnahmefixiert. Damit lassen sich die Führungs- und Stellkräfte, die im Betrieb auf die Stellzylinderanordnung wirken besonders sicher direkt in den Funktionsblockeinleiten und über diesen in entsprechende Kopplungsmittel (z.B. am Gehäuse der elektrischen Antriebseinheit) übertragen.

Es gibt dabei eine Ausführung, bei der die Funktionseinheit bzw. der Funktionsblock zwei Stirnflächen aufweist, Über die eine sind die Tankbaugruppe und die Stellzylinderanordnung an der Funktionseinheit angeordnet. Die andere Stirnfläche nimmt die elektrische Antriebseinheit und das Pumpaggregat auf.

Zwischen den beiden Stirnflächen und insbesondere zwischen dem Pumpaggregat in seiner Ausnehmung und der Stellzylinderanordnung in seiner Aufnahme sowie der Tankbaugruppe verläuft die Leitungsanordnung, die entsprechend der gewünschten Ausführung ausgestaltet sein kann.

Eine besondere schlanke Ausführung ist dann möglich, wenn die beiden Stirnflächen voneinander abgewandt angeordnet sind, so dass die elektrische Antriebseinheit und das Pumpaggregat einerseits sowie die Stellzylinderanordnung und die Tankbaugruppe andererseits koaxial zu einer Hauptachse angeordnet sind. Bei so einer Anordnung werden dann beispielsweise die Stellkräfte zwischen Stellzylinderanordnung und einem ebenfalls mit der Funktionseinheit/dem Funktionsblock gekoppelten Gehäuse der elektrischen Antriebseinheit übertragen.

Sind die Stirnflächen rechtwinklig zueinander angeordnet, so können die Stellkräfte auch direkt zwischen der Stellzylinderanordnung und der Funktionseinheit/dem Funktionsblock übertragen werden. So kann ein besonders kurz bauendes Lüftgerät realisiert werden.

Für einen energiesparenden Aussetzbetrieb mit "Fail-Safe"-Funktion ist vorgesehen, dass das Pumpaggregat über ein Rückschlagventil mit der Stellzylinderanordnung gekoppelt ist, so dass bei ausgefahrener Position der Stellzylinderanordnung und einem bestimmten Druck das Pumpaggregat abgeschaltet werden kann, ohne dass Hydraulikmedium zurück in das Pumpaggregat fließt und dadurch die Stellung der Stellzylinderanordnung beeinflusst würde. Die "Fail-Safe"-Funktion dadurch realisiert, dass die Stellzylinderanordnung über eine Abzweigung und ein stromlos geöffnetes 2/2- Wegeventil mit der Tankbaugruppe verbunden ist. Damit wird sichergestellt, dass in jedem Fall in einer Notsituation (z.B. Stromausfall, Funktionsfehler) das 2/2-Wegeventil in seine geöffnete Stellung gelangt und die Stellzylinderanordnung hydraulisch mit der Tankbaugruppe verbindet, so dass eine Bremsfeder die Bremse in ihre geschlossene Stellung überführt und dabei das Hydraulikmedium aus der Stellzylinderanordnung in die Tankbaugruppe zurückführt. Sind mehrere (wenigstens zwei) 2/2-Wegeventile vorgesehen, so ist durch die Redundanz die Betriebssicherheit erhöht, um auch bei Ausfall eines der 2/2-Wegeventile einen zuverlässigen "Fail-Safe"-Betrieb sicherzustellen.

Überdrücke im System werden über ein Druckbegrenzungsventil verhindert, welches zwischen dem Pumpaggregat und dem Rückschlagventil über einen dort abzweigenden Kanal einen Rückfluss des Hydraulikmediums bei übergroßem Druck sicherstellt. Damit werden Überlastungen der hydraulisch beaufschlagten Bauteile des Bremslüftgerätes verhindert.

In einer Anordnung ist ein zwischen Rückschlagventil und Stellzylinderanordnung wirkender Druckschalter vorgesehen, der zur Steuerung des Pumpaggregates bzw. der elektrischen Antriebseinheit genutzt wird. Bei Überschreiten eines bestimmtes Schwellwertes (oberer Druckschwellwert) wird die elektrische Antriebseinheit und damit auch das damit gekoppelte Pumpaggregat abgeschaltet, während bei Unterschreiten eines weiteren Schwellwertes (unterer Druckschwellwert) diese wieder in Betrieb genommen werden, um den Druckabfall, der zwischen dem oberen und dem unteren Druckschwellwert auszugleichen und die Stellzylinderanordnung in der Lüftstellung zu halten, in der sie eine Bremsfeder spannt..

In einer Anordnung in der Rückschlagventil, 2/2-Wegeventil, Druckbegrenzungsventil und/oder Druckschalter innerhalb der Tankbaugruppe angeordnet sind, lassen sich diese Elemente besonders gut schützen und gegebenenfalls auch besonders gut kühlen, nämlich dadurch, dass die Elemente von Hydraulikflüssigkeit umspült werden, welche die Betriebswärme abführt. Dies gilt insbesondere für die elektromagnetisch betriebenen 2/2-Wegeventile.

In einer Ausführung werden dabei alle erforderlich Steuer- und oder Versorgungsleitungen, also Strom und Signalleitungen mittels einer entnehmbaren, abdichtenden Kabeldurchführung über die elektrische Antriebseinheit durch die Funktionseinheit/den Funktionsblock in die Tankbaugruppe geführt, wo sie dann mit den entsprechenden Bauelementen verbunden werden können. Die Leitungen können in der Kabeldurchführung vormontiert in die Funktionseinheit eingesetzt und eingedichtet werden und dann jeweils in der Tankbaugruppe mit den entsprechenden Funktionselementen verbunden werden und in der elektrischen Antriebseinheit über einen Schaltkasten nach außen zugänglich gemacht werden. Die entnehmbare Kabeldurchführung ist dabei so gestaltet, dass sie die Tankbaugruppe gegen die elektrische Antriebseinheit abdichtet.

Weiterhin betrifft die Erfindung eine Bremsanordnung mit einem erfindungsgemäßen Bremslüftgerät.

Eine Funktionseinheit für ein solches Bremslüftgerät zeichnet sich insbesondere dadurch aus, dass sie als einstückiger Funktionsblock ausgebildet ist, in dem sowohl die Zylinderaufnahme, die Ausnehmung zur Aufnahme eines Pumpaggregats sowie alle für die hydraulischen Funktionen notwendigen Kanäle, welche eine Leitungsanordnung bilden, ausgebildet sind.

Diese besondere Bauweise hat mehrere Vorteile: Sie erlaubt eine sehr kompakte, stabile und funktionssichere Bauweise. Das Pumpaggregat, das beispielsweise als Zahnradpumpe ausgebildet ist, kann so ohne eigenes Gehäuse im Funktionsblock angeordnet werden, der an geeigneten Stellen mit Zufuhröffnungen (Pumpeneingang) und Abfuhröffnungen (Pumpenausgang) versehen sein kann.

Durch die Ausbildung aller notwendigen Leitungen im Funktionsblock werden Dichtungsprobleme auf ein Minimum reduziert.

Die im Funktionsblock ausgebildete Zylinderaufnahmeerlaubteine mechanisch und hydraulischwirksame Fixierung der Stellzylinderanordnung, die zum einen für den Hochdruckbetrieb geeignet ist und zum anderen die mechanischen Beanspruchungen (Quer- und Längsbelastung) zuverlässig in den Funktionsblock überträgt, der damit gleichzeitig eine strukturelle Kernfunktion des Bremslüftgerätes übernehmen kann, nämlich die Kraftübertragung im Einbauzustand und insbesondere in der Lüftstellung.

Dadurch, dass auch alle Hydraulikmedium-führenden Leitungen und Kanäle im Funktionsblock ausgebildet sind, wird die Systemelastizität, insbesondere in den druckführenden Leitungen, verringert. Einerseits dadurch, dass die Leitungswege selbst sehr kurz ausgebildet sein können und andererseits dadurch, dass Leitungselastizitäten, wie sie bei separaten, vergleichsweise flexiblen und elastischen Hydraulikleitungen oder -schläuchen auftreten können, praktisch keine Rolle spielen.

In einer Ausführung ist dabei die Zylinderaufnahme mit einem diese umgebenden Dichtungsbereich versehen, der zum Anschluss einer Tankbaugruppe dient. Diese Ausführung ermöglicht es, in sehr platzsparender Weise und besonders betriebssicher das Hydraulikmedium nahe am Verbraucher zur Verfügung zu stellen, da auf diese Weise ein die Stellzylinderanordnung weitgehend koaxial umgebender Vorratsraum realisiert werden kann, der das Hydraulikmedium direkt an der Funktionseinheit, die mit entsprechenden Zufuhröffnungen versehen sein kann, zur Verfügung zu stellen. Getrennte Zuleitungen können völlig entfallen. Darüber hinaus kann das Hydraulikmedium auch weitgehend lageunabhängig, also sowohl bei stehenden Bremslüftgeräten als auch bei liegenden Bremslüftgeräten, zur Verfügung gestellt werden.

Durch den innigen Anschluss der Tankbaugruppe an die Funktionseinheit bzw. den Funktionsblock ist auch hier eine mechanisch hoch beanspruchbare Kopplung realisierbar, sodass gegebenenfalls auch die Tankbaugruppe selbst als lastaufnehmendes bzw. lastübertragendes Bauteil für Quer- und Führungskräfte ausführbar ist.

Es gibt eine Ausführung bei der dies in ähnlicher Weise für eine Gehäusebaugruppe realisiert ist. Hier ist eine Aufnahme bzw. ein Aufnahmebereich vorgesehen, welcher die Ausnehmung zur Aufnahme des Pumpaggregates umgibt. Damit lässt sich besonders einfach die Antriebseinheit in exakt justierter Stellung zum Pumpaggregat anordnen. Auch die Antriebsgehäusebaugruppe kann so lastaufnehmende bzw. lastübertragende Funktionen übernehmen, ohne dass die darin untergebrachte Antriebseinheit selbst die durch die Stellkräfte hervorgerufenen Beanspruchungen übertragen müsste.

Bei einer Ausführung, bei welcher die Stellzylinderaufnahme in einem innerhalb des Dichtungsbereiches verlaufenden Sockelabschnitt des Funktionsblocks ausgebildet ist, lässt sich die Baulänge des Bremslüftgerätes weiter reduzieren. Dieser Sockel ragt nämlich dann in die Tankbaugruppe hinein.

Darüber hinaus wird die Zu-und Abfuhr von Hydraulikmedium in den bzw. aus dem Tank vereinfacht. Entsprechende Zu- oder Abfuhröffnungen sind nämlich bei so einer Ausführung nicht nur auf Öffnungen in der tankseitigen Stirnfläche des Sockels beschränkt, sondern sie können auch in aus den Seitenflächen des Sockels austretenden Öffnungen bzw. Kanälen realisiert werden. Dies hat insbesondere auch Vorteile bei unterschiedlichen Einbaulagen eines Bremslüftgerätes (waagerecht oder senkrecht).

In einer Ausführung sind die wesentlichen für die Steuerung des Bremslüftgerätes erforderlichen bzw. optionalen Ventilanschlüsse, in denen die notwendigen Steuerventile und/oder Messelemente angeordnet sind, in einer Stirnfläche des Sockels ausgebildet. Diese Anordnung erlaubt eine wartungs- und montagefreundliche Anordnung dieser Bauelemente. Sie können bei abgenommener Tankbaugruppe leicht ein- und ausgebaut bzw. eingestellt werden. Es ist sogar möglich bestimmte Einstellarbeiten an diesen Bauelementen durch entsprechende (verschließbare) Öffnungen in der Tankbaugruppe vorzunehmen. Auch fertigungstechnisch bietet diese Anordnung Vorteile, da sämtliche notwendigen Ventilsitze mit entsprechenden Anschlussgewinden in einer Aufspannung am Funktionsblock ausgebildet werden können.

In einer Ausführung ist dabei ein Ventilanschluss zur Aufnahme eines Rückschlagventils vorgesehen. Dieses Rückschlagventil dient dazu den Rückfluss des Hydraulikmediums zu verhindern, das vom Pumpaggregat zur Stellzylinderanordnung befördert wird. Das Rückschlagventil kann dabei in der besonders einfach zu montierenden Sitzbauweise ausgeführt werden und wirkt in einem Kanal/Leitungsabschnitt, der zwischen Pumpausgang und einem Zufluss in der Aufnahme der Stellzylinderanordnung ausgebildet ist.

In einer Ausführung ist ebenfalls zwischen Zylinderaufnahme und Dichtungsbereich wenigstens eine zweite Ventilaufnahme vorgesehen, die zur Aufnahme eines 2/2-Wege-Ventils vorgesehen ist. Ein solches 2/2-Wege-Ventil, ebenfalls als Sitzventil ausgebildet, stellt in offener Ruhestellung sicher, dass das Hydraulikmedium aus der Stellzylinderanordnung zurück in die Tankbaugruppe fließen kann. Im angeregten Zustand (elektromagnetisch betätigt) nimmt es seine Sperrstellung ein und verhindert den Rückfluss, wirkt also als Lasthalteventil in einem Kanal/Leitungsabschnitt zwischen der Stellzylinderanordnung bzw. dem Rückschlagventil und der Tankbaugruppe. Die Anordnung der Ventilaufnahme in diesem Bereich erlaubt eine einfache Verbindung mit dem Ventilanschluss des Rückschlagventils und der Zylinderaufnahme über axial bzw. quer verlaufenden Bohrungen.

In einer anderen Ausführung sind zwei solcher Ventilaufnahmen vorgesehen, die jeweils ein entsprechendes 2/2-Wege-Ventil aufnehmen. Durch die redundante Anordnung wird sichergestellt, dass auch bei Ausfall eines dieser Ventile die zuverlässige Entlastung der Stellzylinderanordnung im Notfall erfolgt (stromlos offen) und das Lüftgerät die Bremsfeder freigibt und den Einfall der Bremse erlaubt. Die beiden Ventilaufnahmen können nebeneinander angeordnet werden und so besonders einfach parallel geschaltet werden.

In einer weiteren Ausführung ist eine vierte Ventilaufnahme zur Aufnahme eines Drosselventils vorgesehen über ein solches, gegebenenfalls einstellbares Drosselventil kann die Stellcharakteristik beim Bremsen über den Durchfluss am Drosselventil beeinflusst werden. So ein Drosselventil wirkt zwischen der Stellzylinderanordnung und dem einen oder beiden 2/2-WegeVentilen. Damit können in vielfältiger Weise gesteuerte Einfallcharakteristika realisiert werden, indem entweder nur eines oder beide der 2/2-Wegeventile angesteuert werden und über das Drosselventil unterschiedliche und ggf. einstellbare Strömungsquerschnitte realisiert werden.

Es gibt Ausführungen bei denen eine Druckschalteraufnahme vorgesehen ist. Ein dort eingesetzter Druckschalter nimmt den an der Stellzylinderanordnung anliegenden Druck im Hydraulikmedium auf, gibt bei Überschreiten eines bestimmten Arbeitsdruckes (Schwellwert) ein Schaltsignal an eine Steuerungseinheit ab, welche dann den Antriebsmotor und damit das Pumpaggregat abschaltet. Bei Unterschreiten eines unteren Schwellwerts wird der Antrieb und damitdie Pumpe wieder in Gang gesetzt, um den beispielsweise durch Leckagen verursachten Druckverlust wieder auszugleichen und die Stellzylinderanordnung in ihrer Arbeitsstellung zu halten.

In einer weiteren Ausführung durchsetzt ein zwischen Zylinderaufnahme und Dichtungsbereich sowie zwischen Ausnehmung und Gehäuseanschluss mündender Kabelkanal die Funktionseinheit. Dieser Kabelkanal verläuft völlig unabhängig von den die Leitungsanordnung bildenden Kanälen und dient dazu, Steuer- und Messsignalleitungen aus dem Tankbereich in die Antriebsgehäusebaugruppe zu führen, wo diese dann gemeinsam mit den Anschlussleitungen für einen Elektromotor in einen Anschluss-/Schaltkasten geführt werden kann. Zur Abdichtung kann dabei eine hermetisch abdichtbare Kabeldurchführung dienen, die mit einer für das Hydraulikmedium nicht durchdringbaren Barriere versehen ist.

Zurückkommend zur Fig. 1 zeigt diese in perspektivischer Darstellung ein Bremslüftgerät 1 mit seinen Hauptkomponenten, der Funktionseinheit 100, einer elektrischen Antriebseinheit 200 sowie einer Tankbaugruppe 300, die von einer Stellzylinderanordnung 400 durchsetzt wird. Am Boden 201 der elektrischen Antriebseinheit 200 sind zwei Anschlussösen 202 ausgebildet. Den Deckel 301 durchsetzt der Stellkolben 401 der Stellzylinderanordnung 400. Er weist an seinem Ende ebenfalls eine Anschlussöse 402 auf. Der Stellkolben 401 ist in Fig. 1 in seiner Ruhelage, also in seiner eingefahrenen Stellung dargestellt.

Seitlich an der elektrischen Antriebseinheit 200 ist ein Anschlusskasten 201 mit einer Leitungszufuhr 201a angebracht. Die Funktionseinheit 100 weist einen zentralen Flansch 101 auf an dessen frei liegender, seitlicher Umfangsfläche 102 zwei Anschlüsse 103, 104 vorgesehen sind, deren Funktion und Aufgabe weiter unten erläutert wird.

Im Betrieb ist das Bremslüftgerät 1 zwischen der dargestellten Ruhestellung und einer Arbeitsstellung, in der der Stellkolben 401 ausgefahren wird, verstellbar. Dazu wird das Bremslüftgerät 1 mit den Anschlussösen 402 und 202 mit einem Bremshebelmechanismus 2 gekoppelt, sodass sich die Bremskörper bei ausgefahrenem Stellkolben 401 in ihrer Lüftstellung, d.h. in gelöster Stellung, befinden. Dabei wird eine parallel zum Bremslüftgerät 1 wirkende Feder 3 gespannt, welche eine Bremskraft auf das Bremshebelgestänge 2 ausübt, sobald der Stellkolben 401 zum Bremsen in seine Ruhelage gelangt (vgl. Fig. 7)

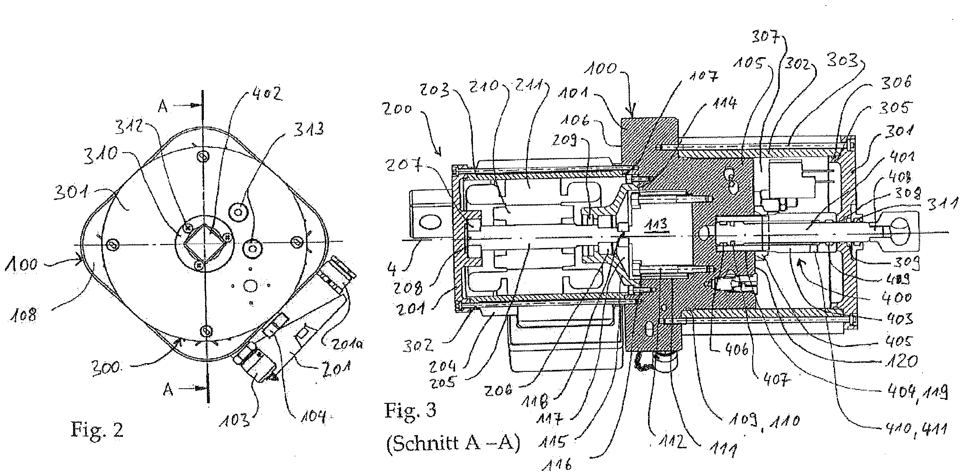

Fig. 3 zeigt den inneren Aufbau des Bremslüftgerätes 1.

Die Funktionseinheit 100 ist als einstückiger Funktionsblock ausgebildet, der einen Flansch 101 aufweist, der eine quadratisch abgerundete Grundfläche aufweist und von dem ausgehend in Axialrichtung des Bremslüftgerätes 1 (entlang der zentralen Achse 4) ein Sockel 105 mit kreisrundem Querschnitt in die Tankbaugruppe 300 hinein verläuft.

An der antriebsseitigen Stirnfläche 106 des Funktionsblocks 100 ist die elektrische Antriebseinheit 200 über Spannanker 302 fixiert, die den Deckel 201 durchsetzen und in entsprechenden Sacklöchern im Funktionsblock 100 fixiert sind. Dabei wird der Gehäusekörper 203, der rohrförmig ausgebildet ist und an seiner Außenfläche Kühlrippen 204 aufweist, zwischen einem am Funktionsblock 100 ausgebildeten Gehäuseanschluss 107 und dem Boden 201 eingespannt.

In gleicher Weise ist gegenüberliegend der rohrförmige Tankkörper 302 über ähnliche Spannanker 303 zwischen dem Deckel 301 und der tankseitigen Stirnfläche 108 des Flansches 101 eingespannt. Auch der Tankkörper 302 weist Kühlrippen 304 auf.

Der Sockel 105 ragt dabei in den Tankkörper 302 hinein und weist in der Nähe des Übergangs zur Stirnfläche 108 einen Dichtungsbereich 109 auf, in dem eine als O-Ring ausgebildete Radialdichtung 110 den Innenraum des Tankkörpers 302 an der Innenfläche des Tankkörpers 302 gegen die Umgebung abdichtet. Der Deckel 301 ist in gleicher Weise über einen in den Tanckörper 302 hineinragenden Kragen 305, der an seinem Außenumfang eine weitere Radialdichtung 306 aufweist, abgedichtet.

In der antriebsseitigen Stirnfläche 106 des Funktionsblocks 100 ist zentral innerhalb des Gehäuseanschlusses 107 eine Ausnehmung 111 ausgearbeitet, die zur Aufnahme des über Schrauben 112 fixierten Pumpaggregats 113 dient. Zwischen der Ausnehmung 111 und dem Gehäuseanschluss 107 ist eine Aufnahmefläche 114 ausgearbeitet, die relativ zur Stirnfläche 106 abgesenkt ist und die zur Aufnahme eines Lagerträgerdeckels 115 dient, der über Schrauben 116 mit dem Funktionsblock 100 verschraubt ist und in seiner Stirnfläche eine umlaufende Dichtungskammer aufweist, welche den Innenraum des Lagerträgerdeckels 115 gegen den Innenraum des Gehäusekörpers 203 der elektrischen Antriebseinheit 200 abdichtet. Der Lagerträgerdeckel 115 bildet mit der Ausnehmung 111 im Funktionsblock 100 eine Kammer 117, welche mit Hydraulikmedium durchspült wird. Der Lagerträgerdeckel 115 dient zur Aufnahme der Antriebswelle 205, die an ihrem pumpenseitigen Ende in einem als Wälzlager ausgebildeten Festlager 206 aufgenommen wird und an ihrem anderen Ende über ein ebenfalls als Wälzlager ausgebildetes Loslager 207, welches axial verschieblich über eine Tellerfeder 208 im Boden 201 der elektrischen Antriebseinheit 200 aufgenommen ist. Weiterhin dichten Wellendichtungen 209 die Antriebswelle 205 zur Kammer 117 ab.

Drehfest auf der Antriebswelle 205 sitzt ein Rotor 210, der über die im Gehäusekörper 203 verankerten Statorwicklungen 211 angetrieben wird. Rotor 210 und die Statorwicklungen 211 bilden den elektrischen Antriebsmotor.

Das abtriebseitige Ende der Antriebswelle 205 ist über eine Schlitzkupplung 118 mit dem Antriebsende des Pumpaggregats 113 gekoppelt. Diese Schlitzkupplung 118 dient dazu, geringfügigen Achsversatz zwischen der Antriebswelle 205 und dem Antriebsende des Pumpaggregats 113 auszugleichen, und stellt eine montagefreundliche Kopplung zwischen der Antriebswelle 205 und dem Antriebsende des Pumpaggregats dar. Sie ist in der Kammer 117 angeordnet.

Die Lagerung der Antriebswelle 205 der elektrischen Antriebseinheit 200 im eingedichteten Lagerträgerdeckel 115 erlaubt es, den Elektromotor im trockenen Zustand zu betreiben. Dadurch, dass die Kammer 117 selbst mit Hydraulikmedium durchspült wird, werden sowohl das Wälzlager 206 als auch die Schlitzkupplung 118 im Betrieb geschmiert.

Das Pumpaggregat 113 ist als Innenzahnradpumpe ausgebildet, die das Hydraulikmedium aus der Kammer 117 axial ansaugt, die über die Ausnehmung 111 mit Hydraulikmedium versorgt wird, und axial abgibt (siehe unten).Zahnradpumpen und insbesondere Innenzahnradpumpen weisen eine sehr geringe Pulsation, Geräuscharmut und eine lange Lebensdauer auf. Sie sind in Druckbereichen von etwa 5 bis über 250 Bar einsetzbar und erlauben ein Fördervolumen von etwa 2 bis 4 Liter/min.

Koaxial zur Ausnehmung 111 ist die Stellzylinderanordnung 400 über ihr Zylinderrohr 403 über ein Außengewinde 404 in eine entsprechende Zylinderaufnahme 119 im Funktionsblock 100 bzw. im Sockel 105 fixiert. Das Zylinderrohr 403 ragt in den Innenraum 307 des Tankkörpers 302 und endet nahe der Innenseite des Deckels 301. Die Einbaulage 403 des Zylinderrohrs wird über eine Kontermutter 405 fixiert. Im Zylinderrohr 403 verläuft der Stellkolben 401, der an seinem in die Zylinderaufnahme 119 hineinragendem Ende umlaufende Nuten zur Aufnahme eines Führungsrings 406 und eines Dichtungsrings 407 aufweist.

Das gegenüberliegende Stellende 408 ragt aus dem Zylinderrohr 403 und durch den Deckel 301 hindurch nach außen. Am Ende des Zylinderrohrs 403 ist eine Nut zur Aufnahme eines Führungsrings 409 vorgesehen sowie mehrere, kranzartige Bohrungen 410 zur Aufnahme eines induktiven Sensors 411, welcher die Position des Stellkolbens 401 im Zylinderrohr 403 überwacht und die Arbeitsstellung (ausgefahrene Stellung) des Stellkolbens 401 detektiert und ein entsprechendes Signal abgibt. Dadurch dass mehrere kranzartige Bohrungen 410 vorgesehen sind, kann unabhängig von der Einbau-Drehlage des Zylinderrohres 403 der induktive Sensor in der Bohrung 410 angeordnet werden, in der er günstig mit einer Anschlussleitung versehen werden kann.

Im Deckel 301 sind ein weiterer Führungsring 308 sowie ein Dichtungsring 309 angeordnet. Der Dichtungsring 309 wird über eine Scheibe 310 fixiert, die zusätzlich einen Schmutzabstreifer 311 trägt, der den Dichtungsring 309 und den Führungsring 308 gegen von außen eintretende abrasive Stoffe (Staub etc.) schützt. Die Scheibe 310 ist über Schrauben 312 im Deckel 301 fixiert (vgl. Fig. 2).

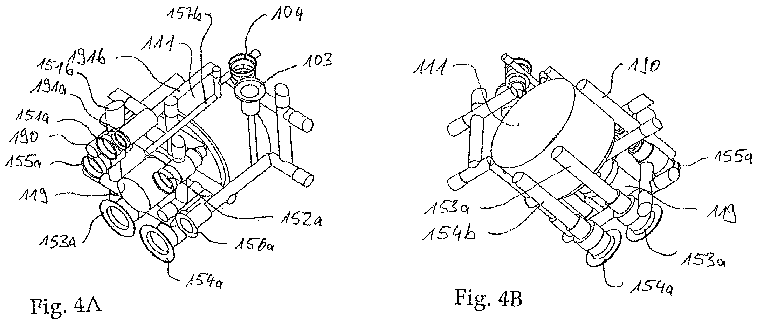

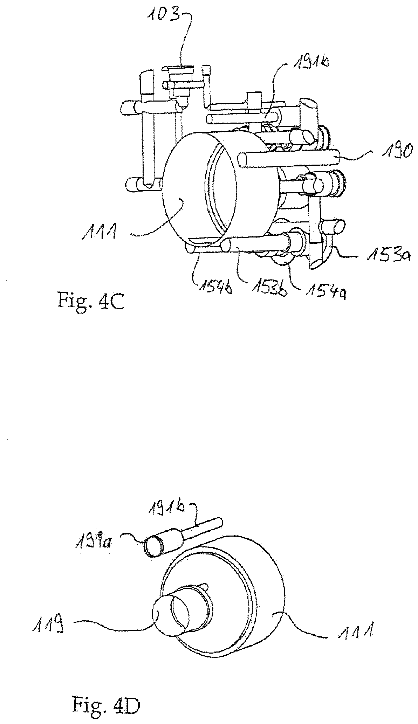

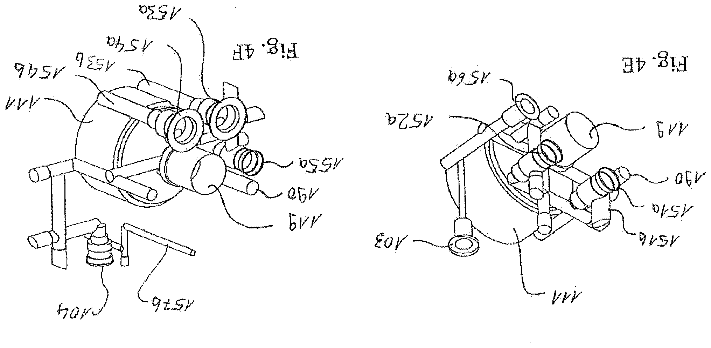

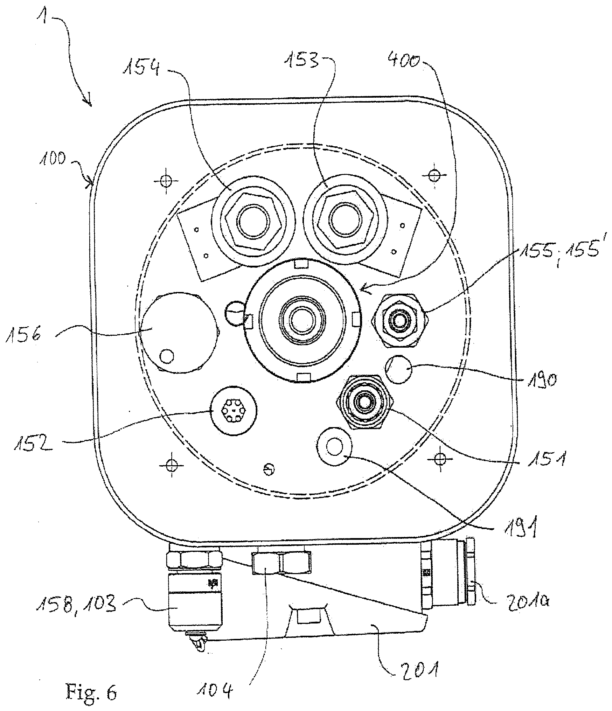

In der tankseitigen Stirnfläche 120 des Sockels 105 sind neben der Zylinderaufnahme 119 mehrere Ventilaufnahmen bzw. -anschlüsse vorgesehen, deren Funktion weiter unten in Verbindung mit den Figuren 4A - 4F beschrieben wird. Diese Ventilaufnahmen tragen mehrere Funktionselemente, die sich vom Fluidmedium benetzt innerhalb des Innenraums 307 der Tankbaugruppe 300 befinden und dort gut geschützt gegen äußere Einflüsse untergebracht sind. Die Anordnung der Ventile in der Stirnfläche 120 des Sockels 105 ist der Figur 6 entnehmbar.

Zu Einstellzwecken können diese teilweise über Schraubstopfen 313 im Deckel 301 zugänglich gemacht werden. Sowohl die Schaltelemente als auch der induktive Sensor 410 sind teilweise mit Steuer- und Stromanschlüssen versehen. Die zugehörigen Leitungen werden durch den Funktionsblock 100 in den Gehäusekörper 203 der elektrischen Antriebseinheit 200 und von dort in den Anschlusskasten 201 geführt. Dazu folgen genauere Ausführungen weiter unten.

Beim Betrieb des Bremslüftgerätes wird das Pumpaggregat 113 über die elektrische Antriebseinheit 200 in Bewegung gesetzt, das zugeführte Hydraulikmedium wird unter Druck gesetzt und in die Zylinderaufnahme 119 gepumpt, wo es am Stirnende des Stellkolbens 401 einen Druck aufbaut, der diesen im Zylinderrohr 403 und aus dem Deckel 301 herausschiebt. Gelangt dann das druckbeaufschlagte Ende des Stellkolbens 401 in den Bereich des Sensors 410 so gibt dieser ein Signal ab, ggf. an eine Steuerung, das die Stellung des Stellkolbens 401 und damit den Betriebszustand des Bremslüftgeräts 1 bzw. einer davon angesteuerten Bremseinrichtung anzeigt. Dieses Signal kann zur Steuerung, Kontrolle und Überwachung aber auch zur Aufzeichnung unterschiedlicher Betriebszustände genutzt werden.

Der auf den Stellkolben 401 wirkende Druck wird durch verschiedene Ventile aufrechterhalten. Zum Einfahren des Stellkolbens 401 werden Schaltventile betätigt, welche das im Zylinderrohr 403 befindliche Hydraulikmedium-Volumen zurück in den Tankkörper 302 fließen lassen und der Stellkolben 401 wird durch äußere Kräfte (Bremsfeder) wieder zurück in seine Ruhestellung geschoben.

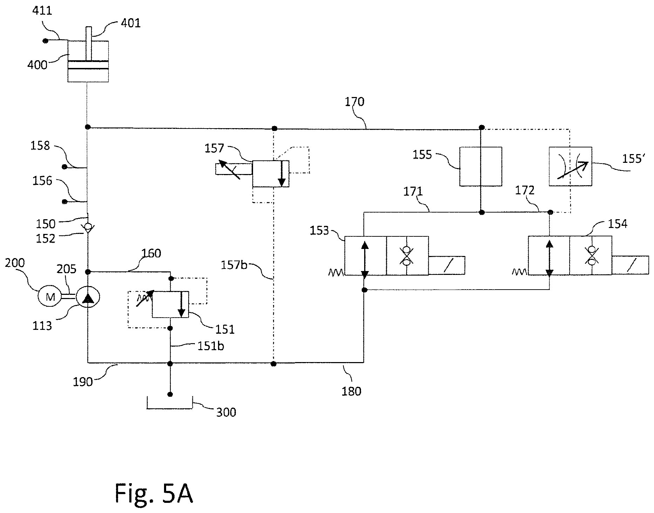

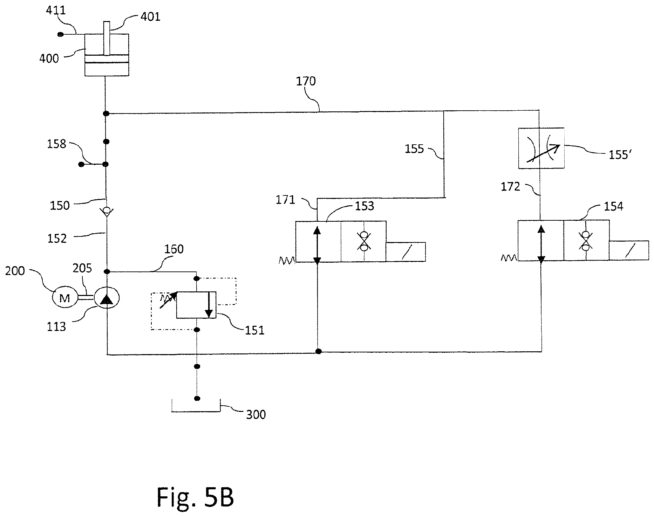

Die dazu erforderliche Hydrauliksteuerung wird nun anhand der Fig. 5A und 5B erläutert, die einen Schaltplan zeigt. Die elektrische Antriebseinheit 200 ist über die Antriebswelle 205 mit dem Pumpaggregat 113 verbunden. Von dort führt eine Hydraulikleitung 150 zur Stellzylinderanordnung 400. Zwischen der Stellzylinderanordnung 400 und dem Pumpaggregat 113 ist ein Rückschlagventil 152 geschaltet, welches in Richtung Stellzylinderanordnung 400 durchlässig ist und in die Gegenrichtung sperrt. Zwischen dem Rückschlagventil 152 ist die Hydraulikleitung 150 über eine Abzweigung 160 mit einem Druckbegrenzungsventil 151 verbunden. Zwischen dem Rückschlagventil 152 und der Stellzylinderanordnung 400 ist ein Messanschluss 158 und ein Druckschalter 156 vorgesehen.

Eine Abzweigleitung 170 führt über einen Anschluss 155, der entweder als freier Durchfluss ausgebildet ist oder optional ein Drosselventil 155' enthält (im gestrichelten Ast), über die Zweige 171 und 172 zu den parallel geschalteten magnetbetätigten, stromlos geöffneten 2/2-Wege-Ventilen 153 und 154. Von dort führt ein Rückfluss 180 in die Tankbaugruppe 300, die über einen Zufluss 190 mit dem Ansaugende des Pumpaggregats 113 verbunden ist.

Bei Betrieb der elektrischen Antriebseinheit 200 wird das Pumpaggregat 113 in Betrieb gesetzt und fördert aus der Tankbaugruppe 300 Hydraulikmedium durch das Rückschlagventil 152 in die Stellzylinderanordnung 400, wo der Stellkolben 401 ausgefahren wird. Dabei befinden sich die 2/2-Wege-Ventile 153 und 154 magnetbetätigt (elektrisch erregt) in ihrer geschlossenen gesperrten Stellung.

Das Druckbegrenzungsventil 151 verhindert dabei, dass bei fortlaufendem Betrieb des Pumpaggregats ein zu hoher Druck aufgebaut wird. Es baut diesen bei Überschreiten eines Grenzdrucks ab und führt das Hydraulikmedium zurück in die Tankbaugruppe 300. Das Rückschlagventil 152 verhindert den Rückfluss des Hydraulikmediums bei abgeschaltetem elektrischen Antrieb 200 bzw. bei stillstehendem Pumpaggregat 113. Der Sensor 411 erfasstdie Stellung des Stellkolbens und gibt ein entsprechendes Signal ab.

Die Steuerung erfolgt hier über den optionalen Druckschalter 156, der bei Überschreiten eines oberen Grenzdrucks die elektrische Antriebseinheit 200 über eine Steuerung außer Betrieb setzt und bei Unterschreiten eines unteren Grenzdrucks wieder in Betrieb setzt, um den Wirkdruck am Stellkolben 401 stabil zu halten. Der Messanschluss 158 dient zur Überprüfung und Überwachung des Pumpendrucks, z.B. über ein Anzeige oder Kontrollgerät, das auch entfernt vom Lüftgerät 1 angeordnet sein kann. Er ist in der Aufnahme 103 in der seitlichen Umfangsfläche 102 des zentralen Flansches 101 angeordnet.

Zum Druckabbau werden die 2/2-Wege-Ventile 153, 154 stromlos gemacht, dabei verstellen sie sich federbelastet in ihre geöffnete Stellung, das Hydraulikmedium fließt aus der Stellzylinderanordnung 400 durch die Leitung 170 und 171 sowie 180 zurück in die Tankbaugruppe 300. Die redundante Ausführung der beiden 2/2-Wege-Ventile 153 und 154 stellt sicher, dass der Druck auch bei einem Funktionsfehler eines der beiden Ventile zuverlässig abgebaut wird und die durch die Stellzylinderanordnung 400 blockierte Bremswirkung zuverlässig eintritt.

Optional ist anstelle des freien Durchflusses 155 ein ggf. auch einstellbares Drosselventil 155' vorgesehen. Damit kann die Bremscharakteristik, also die Einfallgeschwindigkeit der gekoppelten Bremseinrichtung je nach Durchflussquerschnitt des Drosselventils 155' erhöht oder verringert werden. Es ist auch möglich über ein direkt zwischen der Leitung 170 und der Tankbaugruppe 300 (Tankinnenraum 307) wirkendes proportionales Druckbegrenzungsventil 157 die Bremswirkung noch gezielter zu beeinflussen. Zur Aufnahme ist der Anschluss 104 vorgesehen (in Fig. 1 und 6 mit einem Stopfen verschlossen). Über ein solches Proportionalventil können beliebige Bremswirkprofile realisiert werden, die übereine Steuerung aufgegeben werden können. In Verbindung mit einem geeigneten Motormanagement können dabei auch aktive Bremsvorgänge mit der gleichen Bremsanlage realisiert werden. Über die Leitung 157b ist der Anschluss 104 bzw. der Ventilausgang des eingesetzten Proportionalventils 157 mit dem Tankinnenraum 307 verbunden.

Bei der in Figur 5B dargestellten Ausführung erfolgt die Steuerung des elektrischen Antriebs 200 und damit der Pumpe 113 über den Sensor 411 (ohne den Druckschalter 156), der je nach Stellung des Stellkolbens ein entsprechendes Signal an eine Steuerung abgibt und diese der Kolbenstellung entsprechend den Antrieb 200 aktiviert oder deaktiviert.

Im Schaltbetrieb können die 2/2-Wege-Ventile 153 und 154 auch getrennt angesteuert werden. Damit sind drei unterschiedliche Rückfluss- und Einfallgeschwindigkeiten der Bremse realisierbar: Beim Stromlosschalten des Ventils 153 (Ventil 154 bleibt geschlossen) steht der volle Ventilquerschnitt des Ventils 153 für den Rückfluss zur Verfügung (mittlere Rückfluss-/Einfallgeschwindigkeit I).

Beim Stromlosschalten des Ventils 154 (Ventil 153 bleibt geschlossen) steht der durch das Drosselventil 155' reduzierte Ventilquerschnitt vor dem Ventil 154 für den Rückfluss zur Verfügung (niedrige Rückfluss-/Einfallgeschwindigkeit II). Dieser Rückfluss ist über das Drosselventil 155' einstellbar.

Und beim Stromlosschalten der Ventile 153 und 154 stehen beide Ventilquerschnitte (voller Querschnitt an Ventil 153 und reduzierter (ggf. einstellbarer) Querschnitt am Ventil 154 mit Drossel 155') zur Verfügung (erhöhte Rückfluss-/Einfallgeschwindigkeit III).

Auch bei der in Fig. 5B dargestellten Ausführung stellt die redundante Bereitstellung der beiden 2/2-Wege-Ventile 153 und 154 sicher, dass der Druck im Notfall (z.B. Stromausfall) auch bei einem Funktionsfehler eines der beiden Ventile zuverlässig abgebaut wird und die durch die Stellzylinderanordnung 400 blockierte Bremswirkung zuverlässig eintritt.

Die Hydraulikleitungen 150, 170, 171,172, 180, 190 sowie die Aufnahmen für die dargestellten Ventile und Anschlüsse sind alle einstückig im Funktionsblock 100 ausgebildet, wie in den Figuren 4A bis F dargestellt. In der tankseitigen Stirnfläche 120 des Sockels 105 ist ein erster Ventilanschluss 152a zur Aufnahme des Rückschlagventils 152 vorgesehen, zwei zweite Ventilanschlüsse 153a und 154a zur Aufnahme der 2/2-WegeVentile 153 und 154, eine dritte Ventilaufnahme 151a zur Aufnahme des Druckbegrenzungsventils 151, eine vierte Ventilaufnahme 155a zur Aufnahme des Drosselventils 155', welches dort optional bzw. alternativ zu einem Durchfluss-Dummy 155 eingesetzt werden kann. Weiter ist eine Aufnahme 156a zur Aufnahme des optionalen Druckschalters 156 vorgesehen.

Darüber hinaus führt eine als Kabelkanal ausgebildete Verbindung 191b durch den Funktionsblock 100, welcher den Tankinnenraum 307 mit dem Innenraum der elektrischen Antriebseinheit 200 verbindet. Tankseitig ist hier eine Aufnahme 191a vorgesehen, in die eine abdichtende Kabeldurchführung 191 eingesetzt werden kann.

Zusätzlich besteht eine Zufuhrleitung 190 aus dem Tankinnenraum 307, welche die Ausnehmung 111, in der das Pumpaggregat 113 sitzt, radial anschneidet und so Hydraulikflüssigkeit zum radialen Ansaugen zur Verfügung stellt. In ähnlicher Weise sind die Ventilaufnahmen 153a und 154a, welche die 2/2-Wege-Ventile aufnehmen, über entsprechende Kanäle 153b und 154b radial an die Ausnehmung 111 angeschlossen, sodass beim Zurückstellen des Stellkolbens 401 das Hydraulikmedium indirekt über die Ausnehmung 111 in den Tankanschluss zurück in die Tankbaugruppe 300 fließt.

Das Druckbegrenzungsventil 151 ist mit dem Tankinnenraum 307 über eine in die Umfangsfläche des Sockels 105 mündende Leitung 151b verbunden. Ein Ringspalt zwischen der Innenfläche des Tankkörpers 302 und der Umfangsfläche ermöglicht Austausch des Hydraulikmediums zwischen der Leitung 151b und dem Tankinnenraum 307.

Das Ausführungsbeispiel in den Fig. 1, 2, 3, 6 und 7 zeigt ein Lüftgerät 1 bei dem Tankbaugruppe 300 und Stellzylinderanordnung 400 koaxial zur elektrischen Antriebseinheit 200 und dem Pumpaggregat 113 angeordnet sind.

In einer andern Ausführung (siehe Fig. 1A) ist die antriebsseitige Stirnfläche 106, welche die elektrische Antriebseinheit 200 und das Pumpaggregat 113 aufnimmt auch in einem Winkel, insbesondere in einem rechten Winkel zurtankseitigen Stirnfläche 108 angeordnet sein, welche die Stellzylinderanordnung 400 und die Tankbaugruppe 300 trägt. Bei so einer Ausführung ist die Baulänge verkürzt und die Stellkräfte werden dann über Stellzylinderanordnung 400, den Funktionsblock 100' in entsprechende Anschlussmittel 202, die dann direkt am Funktionsblock 100' angebracht sind. Der Funktionsblock 100' ist hier mehrteilig ausgeführt und umfasst einen Stellblock 100'a mit einer Anschlussfläche 120', die mit entsprechenden Aufnahmen für Rückschlagventil 152,2/2-Wegeventile 153,154, Druckbegrenzungsventil 151 und Druckschalter 156 versehen ist. Ein Förderblock 100'b trägt die elektrische Antriebseinheit 200 und das Pumpaggregat 113. Im Stellblock 100'a und Förderblock 100'b sind einander entsprechende Schnittstellen ausgebildet, so dass die Kanäle der im Stellblock 100'a und im Förderblock 100'b ausgebildeten Leitungsanordnung miteinander gekoppelt sind.

Betroffen sind auch folgende Merkmale:
A Funktionseinheit (100) für ein Bremslüftgerät, das aufweist:
   eine Ausnehmung (111) zur Aufnahme eines Pumpaggregats (113),
   eine Stellzylinderaufnahme (119) zur Aufnahme einer Stellzylinderanordnung (400),
   wobei die Funktionseinheit (100) als einstückiger Funktionsblock ausgebildet ist, in dem die Stellzylinderaufnahme (119), die Ausnehmung (111) und mehrere eine Leitungsanordnung bildende Kanäle (150, 160, 170, 171,172, 180, 190) für ein Hydraulikmedium ausgebildet sind.
B Funktionseinheit (100) mit einem die Stellzylinderaufnahme (119) umgebenden Dichtungsbereich (109) zum Anschluss einer Tankbaugruppe (300).
C Funktionseinheit (100) mit einem die Ausnehmung (111) umgebenden Gehäuseanschluss (107) zur Aufnahme einer Antriebsgehäusebaugruppe (203, 201).
D Funktionseinheit (100), wobei zwischen Gehäuseanschluss (107) und Ausnehmung (111) ein die Ausnehmung umgebender Lagerträgeranschluss (114) zur Aufnahme eines Lagerträgerdeckels (115) ausgebildet ist.
E Funktionseinheit (100), wobei die Stellzylinderaufnahme (119) in einem innerhalb des Dichtungsbereiches (109) verlaufenden Sockelbereich (105) des Funktionsblocks (100) ausgebildet ist.
F Funktionseinheit (100), wobei die Tankbaugruppe über eine parallel zu einer Hauptachse (2) und zu einer Außenfläche der Ausnehmung (111) verlaufende Leitung (190) mit der Ausnehmung (111) verbunden ist.
G Funktionseinheit (100), wobei zwischen Stellzylinderaufnahme (119) und Dichtungsbereich (109) ein erster Ventilanschluss (152a) zur Aufnahme eines Rückschlagventils (152) vorgesehen ist.
H Funktionseinheit (100), wobei zwischen Stellzylinderaufnahme (119) und Dichtungsbereich (109) wenigstens eine mit der Leitungsanordnung verbundene zweite Ventilaufnahme (153a; 154a) zur Aufnahme eines 2/2 Wegeventils (153; 154) vorgesehen ist.
I Funktionseinheit, wobei die zweite Ventilaufnahme (153a; 154a) über eine parallel zu einer Hauptachse (2) verlaufende Leitung (153b; 154b) mit der Ausnehmung (111) verbunden ist.
K Funktionseinheit (100), wobei zwischen Stellzylinderaufnahme (119) und Dichtungsbereich (109) eine dritte Ventilaufnahme (151a) zur Aufnahme eines Druckbegrenzungsventils (151) vorgesehen ist.
L Funktionseinheit (100), wobei zwischen Stellzylinderaufnahme (119) und Dichtungsbereich (109) eine vierte Ventilaufnahme (155a) zur Aufnahme eines Drosselventils (155') vorgesehen ist.
M Funktionseinheit (100), wobei zwischen Stellzylinderaufnahme (119) und Dichtungsbereich (109) eine Druckschalteraufnahme (156a) zur Aufnahme eines Druckschalters (156)) vorgesehen ist.
N Funktionseinheit (100), wobei ein zwischen Stellzylinderaufnahme (119) und Dichtungsbereich (109) sowie zwischen Ausnehmung (111) und Gehäuseanschluss (107) mündender Kabelkanal (191b) die Funktionseinheit (100) durchsetzt und tankseitig eine Aufnahme 191a für eine abdichtende Kabeldurchführung 191 ausgebildet ist.
O Bremslüftgerät (1) mit einer Funktionseinheit (100).
P Bremsanordnung mit einem Bremslüftgerät (1).

Weitere Variationen und Ausführungen der Erfindung entnimmt der Fachmann der vorliegenden Offenbarung im Rahmen der Ansprüche.

## Patentansprüche

1. Elektrohydraulisches Breinslüftgerät (1), das aufweist:
eine Stellzylinderanordnung (400), eine Tankbaugruppe (300) zur Aufnahme eines Hydraulikmediums, eine elektrische Antriebseinheit (200) und eine Funktionseinheit (100; 100*) mit einem Pumpaggregat (113),
wobei das Pumpaggregat (113) in einer in der Funktionseinheit (100; 100') ausgebildeten Ausnehmung (111) angeordnet ist, die in kommunizierender Verbindung mit der Tankbaugruppe (300) steht, über eine Leitungsanordnung (150, 160, 170, 171, 172, 180, 190) mit der Stellzylinderanordnung (400) in Wirkverbindung steht und mittels eines Lagerträgetdeckels (115) gegen einen trocken laufenden Antriebsmotor (210, 211) der elektrische Antriebseinheit (200) abgedichtet ist,
wobei den Lagerträgerdeckel (115) eine das Pumpaggregat (113) antreibende Welle (205) durchsetzt,
**dadurch gekennzeichnet,**
**dass** der Lagerträgerdeckel (115) eine die Welle (205) tragende Lageranordnung (206) umfasst.

2. Bremslüftgerät (1) nach Anspruch 1, wobei die Funktionseinheit (100) als einstückiger Funktionsblock ausgebildet ist, in dem eine Stellzylinderaufnahme (119) zur Aufnahme der Stellzylinderanordnung (400), die Ausnehmung (111) und die Leitungsanordnung (150, 160, 170, 171, 172, 180, 190) ausgebildet sind.

3. Bremslüftgerät (1) nach Anspruch 2, bei dem die die Stellzylinderanordnung (400) mit einem Zylinderrohr (403) kraftschlüssig in der Stellzylinderaufnahme (119) lösbar fixiert ist.

4. Bremslüftgerät (1) nach Anspruch 2 oder 3, bei dem die Funktionseinheit (100) zwei Stimflächen (108, 106) aufweist, wobei an der einen Stirnfläche (108) die Tankbaugruppe (300) und die Stellzylinderanordnung (400) und an der anderen Stirnfläche (106) die elektrische Antriebseinheit (200) und das Pumpaggregat (113) angeordnet sind.

5. Bremslüftgerät (1) nach einem der Ansprüche 1 bis 4, bei dem ein Ausgang des Pumpaggregats (113) über ein Rückschlagventil (152) mit der Stellzylinderanordnung (400) und über eine zwischen Rückschlagventil (152) und Stellzylinderanordnung (400) abzweigende Verbindung (170, 171; 172) und wenigstens ein stromlos geöffnetes 2/2-Wegeventil (153; 154) mit der Tankbaugruppe (300) verbunden ist.

6. Bremslüftgerät nach Anspruch 5, bei welchem ein erstes und ein zweites 2/2-Wegeventil (153, 154) vorgesehen ist und zwischen Stellzylinderanordnung (400) und zwischen dem ersten und/oder dem zweiten 2/2-Wegeventil ein Drosselelement (155') vorgesehen ist.

7. Bremslüftgerät nach Anspruch 6, wobei das Drosselelement (155') einen einstellbaren Strömungsquerschnitt aufweist.

8. Bremslüftgerät (1) nach einem der Ansprüche 5 bis 7, bei dem das Pumpaggregat(113) über einen zwischen diesem und dem Rückschlagventil (152) abzweigenden Kanal (160) und ein Druckbegrenzungsventil (151) mit der Tankbaugruppe (300) verbunden ist.

9. Bremslüftgerät (1) nach einem der Ansprüche 5 bis 8, bei dem zwischen Rückschlagventil (152) und Stellzylinderanordnung (400) wirkend ein Druckschalter (156) angeordnet ist.

10. Bremslüftgerät (1) nach einem der Ansprüche 5 bis 9, wobei Rückschlagventil, 2/2-Wegeventil, Druckbegrenzungsventil (151) und/oder Druckschalter (156) innerhalb der Tankbaugruppe (300) angeordnet sind.

11. Bremslüftgerät (1) nach einem der Ansprüche 5 bis 10, bei dem Steuer- und/oder Versorgungsleitungen des Druckschalters bzw. des 2/2-Wegeventils über die elektrische Antriebseinheit (200) mittels einer entnehmbaren Kabeldurchführung (191) durch die Funktionseinheit (100) in die Tankbaugruppe (300) geführt werden.

12. Bremsanordnung (2, 3) mit einem Bremslüftgerät (1) nach einem der vorhergehenden Ansprüche.

## Claims

1. An electrohydraulic brake release device (1), comprising: an actuating cylinder arrangement (400), a tank module (300) for receiving a hydraulic medium, an electric drive unit (200) and a functional unit (100; 100') having a pump assembly (113), wherein the pump assembly (113) is arranged in a recess (111) which is formed in the functional unit (100; 100') and which is in communication with the tank module (300), is functionally connected to the actuating cylinder arrangement (400) via a line arrangement ( 150, 160, 170, 171, 172, 180, 190) and is sealed off from a dry running drive motor (210, 211) of the electric drive unit (200) by means of a bearing carrier cover (115), wherein the bearing carrier cover is intersected by a shaft (205) driving the pump assembly (113), **characterized in that**, the bearing carrier cover (115) comprises a bearing arrangement (206) supporting the shaft (205).

2. The brake release device (1) according to claim 1, wherein the functional unit (100) is formed as an integral functional block in which an actuating cylinder support (119) for receiving the actuating cylinder arrangement (400), the recess (111) and the line arrangement (150, 160, 170, 171, 172, 180, 190) are formed.

3. The brake release device (1) according to claim 2, in which the actuating cylinder arrangement (400) is detachably fixed in the actuating cylinder support (119) in force-fit fashion with a cylinder-pipe (403).

4. The brake release device (1) according to claim 2 or 3, in which the functional unit (100) has two end faces (108, 106), wherein the tank module (300) and the actuating cylinder arrangement (400) are arranged on one end face (108) and the electric drive unit (200) and the pump assembly (113) are arranged on the other end face (106).

5. The brake release device (1) according to any of claims 1 to 4, in which an outlet of the pump assembly (113) is connected to the actuating cylinder arrangement (400) via a check valve (152) and to the tank module ( 300) via a connection (170, 171;172) branching off between check valve (152) and actuating cylinder arrangement (400) and at least one 2/2-way value (153;154) opened without current.

6. The brake release device according to claim 5, in which first and second 2/2-way valves (153, 154) are provided and a throttle element (155') is provided between the actuating cylinder arrangement (400) and between the first and/ or second 2/2-way valves.

7. The brake release device according to claim 6, wherein the throttle element (155') has an adjustable flow cross-section.

8. The brake release device (1) according to any of claims 5 to 7, in which the pump assembly (113) is connected to the tank module (300) via a channel (160) branching off between this pump assembly and the check valve (152) and a pressure limiting valve.

9. The brake release device (1) according to any of claims 5 to 8, in which a press key (156) is arranged in operative fashion between the check valve (152) and the actuating cylinder arrangement (400).

10. The brake release device (1) according to any of claims 5 to 9, wherein the check valve, 2/2- way valve, pressure limiting valve (151) and/ or press key (156) are arranged in the tank module (300).

11. The break release device (1) according to any of claims 5 to 10, in which control and/ or supply lines of the press key and/ or the 2/2-way valve are passed through the functional unit (100) into the tank module (300) via the electric drive unit (200) by means of a removable cable passage (191).

12. A brake arrangement (2, 3) having a brake release device (1) according to any of the preceding claims.

## Revendications

1. Releveur de frein électrohydraulique (1), comprenant :
un ensemble vérin de réglage (400), une unité réservoir (300) destinée à recevoir un fluide hydraulique, une unité d'entraînement électrique (200) et une unité fonctionnelle (100; 100') comprenant une unité de pompage (113),
l'unité de pompage (113) étant disposée dans un évidement (111) formé dans l'unité fonctionnelle (100 ; 100'), lequel est en liaison de communication avec l'unité réservoir (300), est en liaison fonctionnelle avec l'ensemble vérin de réglage (400) par l'intermédiaire d'un système de conduites (150, 160, 170, 171, 172, 180, 190) et est rendu étanche par rapport à un moteur d'entraînement (210, 211) de l'unité d'entraînement électrique (200) fonctionnant à sec par l'intermédiaire d'un couvercle de support de palier (115),
le couvercle de support de palier (115) étant traversé par un arbre (205) entraînant l'unité de pompage (113),
**caractérisé en ce que**
le couvercle de support de palier (115) comprend un agencement de palier (206) supportant l'arbre (205).

2. Releveur de frein (1) selon la revendication 1, dans lequel l'unité fonctionnelle (100) est constituée sous forme de bloc fonctionnel d'une seule pièce dans lequel sont formés un logement de vérin de réglage (119) pour la réception de l'ensemble vérin de réglage (400), l'évidement (111) et le système de conduites (150, 160, 170, 171, 172, 180, 190).

3. Releveur de frein (1) selon la revendication 2, dans lequel l'ensemble vérin de réglage (400) est fixé avec un tube cylindrique (403) de manière amovible dans le logement de vérin de réglage (119) par coopération de forces.

4. Releveur de frein (1) selon la revendication 2 ou 3, dans lequel l'unité fonctionnelle (100) présente deux faces frontales (108, 106), l'unité réservoir (300) et l'ensemble vérin de réglage (400) étant disposés au niveau de l'une des faces frontales (108) et l'unité d'entraînement électrique (200) et l'unité de pompage (113) étant disposées au niveau de l'autre des faces frontales (106).

5. Releveur de frein (1) selon l'une des revendications 1 à 4, dans lequel une sortie de l'unité de pompage (113) est reliée par un clapet anti-retour (152) avec l'ensemble vérin de réglage (400) et par une connexion (170, 171, 172) partant entre le clapet anti-retour (152) et l'ensemble vérin de réglage (400) et au moins une vanne à 2/2 voies (153 ; 154) ouverte sans courant avec l'unité réservoir (300).

6. Releveur de frein (1) selon la revendication 5, dans lequel sont prévues une première et une deuxième vanne à 2/2 voies (153 ; 154) et dans lequel entre l'ensemble vérin de réglage (400) et la première et/ou la deuxième vanne à 2/2 voies (153 ; 154) est prévu un élément d'étranglement (155').

7. Releveur de frein (1) selon la revendication 6, dans lequel l'élément d'étranglement (155') présente une section transversale d'écoulement réglable.

8. Releveur de frein (1) selon l'une des revendications 5 à 7, dans lequel l'unité de pompage (113) est reliée avec l'unité réservoir (300) par un canal (160) partant entre celle-ci et le clapet anti-retour (152) et par une soupape de limitation de pression (151).

9. Releveur de frein (1) selon l'une des revendications 5 à 8, dans lequel est disposé un interrupteur à pression (156) de manière à agir entre le clapet anti-retour (152) et l'ensemble vérin de réglage (400).

10. Releveur de frein (1) selon l'une des revendications 5 à 9, dans lequel le clapet anti-retour, la vanne à 2/2 voies, la soupape de limitation de pression (151) et/ou l'interrupteur à pression (156) sont disposés à l'intérieur de l'unité réservoir (300).

11. Releveur de frein (1) selon l'une des revendications 5 à 10, dans lequel des conduites de commande et/ou d'alimentation de l'interrupteur à pression ou de la vanne à 2/2 voies sont guidées par l'intermédiaire de l'unité d'entraînement électrique (200) au moyen d'un passe-câble (191) amovible à travers l'unité fonctionnelle (100) dans l'unité réservoir (300).

12. Système de frein (2, 3) avec un releveur de frein (1) selon l'une des revendications précédentes.
